# EUROPÄISCHE PATENTANMELDUNG

(11) **EP 1 895 096 A1**
(43) Veröffentlichungstag der Anmeldung: **05.03.2008**
(21) Anmeldenummer: 06018490.0
(22) Anmeldetag: 04.09.2006
(51) Int. Cl.: F01D 5/18, F01D 25/12

(54) **Gekühlte Turbinenlaufschaufel**

(71) Anmelder: SIEMENS AKTIENGESELLSCHAFT, 80333 München (DE)
(72) Erfinder: Gross, Heinz-Jürgen, Dr., 45478 Mühlheim an der Ruhr (DE)

(57) **Zusammenfassung**

Mit der Erfindung wird eine Turbinenlaufschaufel (10) für eine axial durchströmte Gasturbine angegeben, welche mit einem Befestigungsbereich (12) und einem Tragflügelprofil (16) ausgestattet ist. Im Inneren des Tragflügelprofils (16) sind mäanderförmige Kühlkanäle (22b, 22c, 22d) mit zwischengeschalteten Umlenkungsbereichen (30) vorgesehen. In den Umlenkbereichen (30) können sich beim Stand der Technik einstellende Totwassergebiete vermieden werden, indem zumindest eine der Rippen (24) im Bereich der Flügelspitze (27) - zur Vorderkante (18) oder zur Hinterkante (20) hin gekrümmt - verläuft. Gleichzeitig ist in der Krümmung (32) der Rippe (24) eine Öffnung (40) vorgesehen, durch die ein Teil des im Umlenkbereich (30) strömenden Kühlmittels (29) in den benachbarten Kühlkanal (24) übertreten kann.

## Beschreibung

Die Erfindung betrifft eine gekühlte Turbinenlaufschaufel gemäß dem Oberbegriff des Anspruchs 1.

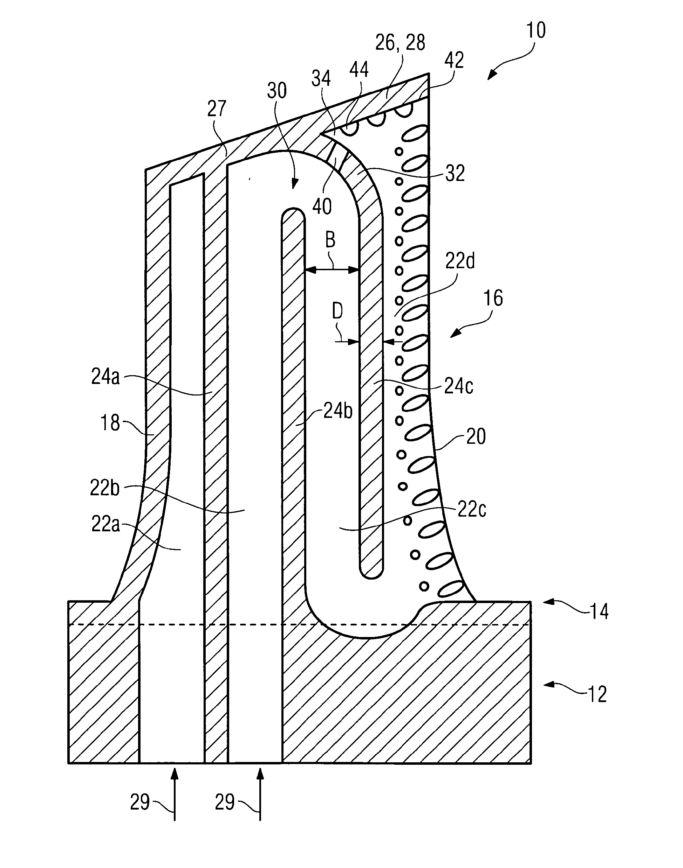

Beispielsweise ist eine gattungsgemäße Turbinenlaufschaufel mit einem Tragflügelprofil aus der EP 0 735 240 A1 bekannt. Zur Kühlung des Tragflügelprofils sind im Inneren mehrere, zueinander benachbarte Kühlkanäle vorgesehen, welche mäanderförmig angeordnet von einem Kühlmittel sequentiell durchströmbar sind. Die Kühlkanäle verlaufen dabei jeweils parallel zur Vorderkante. Jeweils benachbarte Kühlkanäle sind durch Rippen voneinander getrennt, wobei in einem Umlenkungsbereich, in dem die benachbarten Kühlkanäle ineinander übergehen, die Rippen enden. Um in diesen Umlenkungsbereichen, in denen die Kühlluft beispielsweise von einer nach außen gerichteten Strömung in eine nach innen gerichtete Strömung umgelenkt wird, Gebiete mit geringeren Strömungsgeschwindigkeiten und demzufolge unzureichender Kühlung zu vermeiden, sind in diesen Stellen Umlenkblätter (FIG 12) vorgesehen. Trotz der Umlenkblätter kann es aber weiterhin sein, dass im Umlenkbereich lokale Überhitzungen auftreten können, was dann die Lebensdauer der Turbinenschaufel reduziert.

Aufgabe der vorliegenden Erfindung ist daher die Bereitstellung einer Turbinenlaufschaufel, deren Lebensdauer weiter verbessert ist.

Die auf die Bereitstellung einer gattungsgemäßen Turbinenlaufschaufel gerichtete Aufgabe wird gelöst, indem diese gemäß dem kennzeichnenden Teil des Anspruchs 1 ausgebildet ist. Es wird vorgeschlagen, dass zumindest eine der Rippen im Bereich der Flügelspitze gekrümmt in die Abschlusswand übergeht und dass in der Krümmung eine, zwei benachbarte Kühlkanäle verbindende Öffnung vorgesehen ist, durch die zur Prallkühlung der Abschlusswand ein Teil der Kühlmittelströmung auf die Innenseite gerichtet strömbar ist.

Aufgrund der gekrümmten Rippe erfolgt die Umlenkung der durch die Kühlkanäle strömenden Kühlluft wesentlich aerodynamischer. Die Umlenkung wird integraler Bestandteil der Rippe, so dass die Gebiete mit geringerer oder fehlender Strömungsgeschwindigkeit (Totwassergebiete) im Umlenkbereich beseitigt werden können. Die Strömungsgeschwindigkeit wird folglich in demjenigen Kühlkanal annähernd konstant gehalten, zu dem sich die Rippe hin krümmt. Durch die Krümmung der Rippe entsteht jedoch im benachbarten Kühlkanal ein spitzwinkliger Eckenbereich, in dem sich nun seinerseits Totwassergebiete einstellen könnten. Um nun die Totwassergebiete im benachbarten Kühlkanal im Eckenbereich zu vermeiden, ist weiter zumindest eine in der Krümmung angeordnete, die beiden benachbarten Kühlkanäle verbindende Öffnung vorgesehen, durch die ein Teil der Kühlmittelströmung von einem Kühlkanal in den anderen Kühlkanal vorzeitig übertreten kann. Gleichzeitig wird außerdem die ebenfalls häufig lokalen Überhitzungen ausgesetzte Abschlusswand, welche auch als Kronenboden bezeichnet wird, aufgrund des durch die Öffnung durchtretenden Kühlmittelstrahls prallgekühlt, so dass hierdurch ebenfalls eine besonders effiziente Kühlung der Abschlusswand erfolgen kann.

Außerdem kann die in der gekrümmten Rippe angeordnete Öffnung besonders einfach hergestellt werden. Die zum Gießen der Turbinenlaufschaufel verwendete Gießvorrichtung umfasst zur Herstellung der von einem Kühlmittel durchströmbaren Hohlräume einen Gusskern, welcher mäanderförmig angeordnete Kernelemente aufweist. Um diese benachbarten, mäanderförmig angeordneten Kernelemente gegeneinander abzustützen, kann eine Kernstütze zwischen zwei benachbarten Kernelementen vorgesehen sein, welche nach dem Entfernen des Gusskerns aus der gegossenen Turbinenschaufel die Öffnung innerhalb der gekrümmten Rippe hinterlässt. Hierdurch wird ein stabilisierter Gusskern angegeben, was die Genauigkeit es Herstellungsverfahrens erhöht.

Weitere vorteilhafte Ausgestaltungen der Erfindung sind in den Unteransprüchen angegeben.

Vorzugsweise ist die zur Hinterkante benachbarte Rippe im Bereich der Flügelspitze gekrümmt. Dabei ist die Rippe - vom Befestigungsbereich zum Spitzenbereich gesehen - zur Vorderkante hin gekrümmt, so dass in einem Teil des Umlenkungsbereichs zwischen zwei benachbarten Kühlmittelkanälen eine im Wesentlichen gleich bleibende Strömungsquerschnittsfläche bereitgestellt werden kann. Dies reduziert die Druckverluste im Kühlmittel. Um eine besonders leichte Turbinenlaufschaufel zu erhalten, weist die Rippe entlang ihrer Krümmung eine im Wesentlichen gleich bleibende Rippendicke auf.

In einer vorteilhaften Weiterbildung der Erfindung ist die Innenseite der Abschlusswand mit Turbulatoren ausgestattet, wodurch die Kühlung der Abschlusswand bzw. des Kronenbodens in einfacher Art und Weise verbessert werden kann. Je nach Ausgestaltung der Turbinenlaufschaufel ist es möglich, dass die benachbarten Kühlkanäle sequentiell oder auch parallel von einem Kühlmittel durchströmbar sind. Bei parallel durchströmten Kühlmittelkanälen ist darauf zu achten, dass ein ausreichendes Druckgefälle zwischen diesen vorhanden ist, um einen sich durch die Öffnung einstellenden Kühlmittelstrom zu erhalten.

Die Erfindung wird anhand einer Zeichnung erläutert. Die einzige Figur zeigt dabei einen Längsschnitt durch eine erfindungsgemäße Turbinenlaufschaufel mit mäanderförmig angeordneten Kühlkanälen.

Die Figur zeigt eine Turbinenlaufschaufel 10 in einem Längsschnitt. Die Turbinenlaufschaufel 10 weist einen im Querschnitt tannenbaumförmigen Befestigungsbereich 12 mit einer Plattform 14 sowie ein daran angeordnetes Tragflügelprofil 16 auf. Das im Querschnitt aerodynamisch profilierte Tragflügelprofil 16 wird von einer saugseitigen Schaufelwand und einer druckseitigen Schaufelwand gebildet, die sich jeweils von einer Vorderkante 18 zu einer Hinterkante 20 erstrecken und dabei einen im Inneren des Tragflügelprofils 16 angeordneten Hohlraum umschließen, in dem mehrere Kühlkanäle 22a, 22b, 22c, 22d vorgesehen sind. Die Kühlkanäle 22 sind zueinander benachbart und verlaufen jeweils annähernd parallel zur Vorderkante 18. Die zueinander benachbarten Kühlkanäle 22 sind jeweils durch eine die druckseitige Schaufelwand mit der saugseitigen Schaufelwand verbindende Rippe 24a, 24b, 24c abschnittsweise voneinander getrennt. Im Bereich der Flügelspitze 27, welche dem Befestigungsbereich 12 gegenüberliegt, sind die Kühlkanäle 22 von einer Abschlusswand 28 begrenzt. Die Abschlusswand 28 wird auch als Kronenboden bezeichnet.

Die in der Figur dargestellte Turbinenlaufschaufel 10 weist einen vorderkantenseitigen Kühlkanal 22a auf, dem befestigungsseitig ein Kühlmittel 29, beispielsweise Kühlluft oder Kühldampf, zuführbar ist. Die zugeführte Kühlluft kühlt den Bereich der Vorderkante 18 des Tragflügelprofils 16 mit gängigen Kühlmethoden, wie beispielsweise Konvektionskühlung, Prallkühlung und/oder Filmkühlung.

Das dem Kühlkanal 22b fußseitig zuführbare Kühlmittel 29 strömt entlang des Kanals 22b zur Flügelspitze 27 und wird anschließend in einem Umlenkbereich 30 zur Umkehrung seiner Strömungsrichtung, nämlich zum Befestigungsbereich 12 hin umgelenkt. Hierzu ist die zur Hinterkante 20 benachbarte Rippe 24c im Bereich der Flügelspitze 27 bei gleich bleibender Rippendicke D gekrümmt. Die Krümmung 32 ist derart, dass sich die Rippe 24c - vom Befestigungsbereich 12 zum Spitzenbereich 26 gesehen - zur Vorderkante 18 hin krümmt. Hierdurch erhält ein Teil des Umlenkbereichs 30 eine im Vergleich zum Kühlkanal 22c annähernd gleich bleibende Kühlkanalbreite B. Dadurch kann eine besonders aerodynamische Umlenkung des die Kühlkanäle 22b, 22c sequentiell durchströmenden Kühlmittels 29 erreicht werden.

Aufgrund der Krümmung 32 der zur Hinterkante 20 benachbarten Rippe 24c ist im Kühlkanal 22d im Bereich der Flügelspitze 27 ein spitzwinkliger Eckenbereich 34 gebildet. In der Rippe 24c ist im Bereich der Krümmung 32 eine Öffnung 40 vorgesehen, durch die das im Umlenkbereich 30 strömende Kühlmittel 29 aufgrund des sich einstellenden Druckverhältnisses teilweise aus diesem heraus und in den Eckenbereich 34 einströmen kann. Ggf. können auch mehrere Öffnungen 40 vorgesehen sein, um gezielter die Strömung in den Eckenbereichen 34 zu beeinflussen. Somit kann der Eckenbereich 34 ausreichend gekühlt werden. Bereiche mit geringeren Kühlmittel-Strömungsgeschwindigkeiten und demzufolge mit unzureichender Kühlung werden an dieser Stelle somit sicher vermieden.

Der durch die Öffnung 40 durchtretende Kühlmittelstrahl prallt auf die Innenseite 42 der Abschlusswand 28 auf und ruft dabei eine Prallkühlung der Flügelspitze 27 hervor. Um die Kühlwirkung des Prallkühlungsstrahls weiter zu verbessern, können auf der Innenseite 42 der Abschlusswand 28 zudem Turbulatoren 44 vorgesehen sein, die eine weitere Vergrößerung der zu kühlenden Oberfläche herbeiführen. Außerdem kann das entlang der Innenseite 42 der Abschlusswand 28 vorbeiströmende Kühlmittel 29 den kühlluftseitigen Wärmeübergangskoeffizienten aufgrund der Anfachung der Turbulenz weiter vergrößern, wodurch eine weiter gesteigerte Kühlung des Kronenbodens erreicht werden kann.

Auch ist denkbar, die Rippe 24a im Spitzenbereich 26 der Turbinenlaufschaufel 10 erfindungsgemäß in Richtung der Hinterkante 20 gekrümmt in die Abschlusswand 28 übergehen zu lassen und ebenfalls in der Krümmung eine oder mehrere Öffnungen vorzusehen.

Insgesamt wird mit der Erfindung eine Turbinenlaufschaufel 10 für eine, insbesondere stationäre, axial durchströmte Gasturbine angegeben, welche mit einem Befestigungsbereich 12, einem Tragflügelprofil 16 und mehreren im Inneren des Tragflügelprofils 16 mäanderförmig angeordneten Kühlkanälen 22 ausgestattet ist. Um Bereiche mit geringeren Strömungsgeschwindigkeiten von Kühlmittel 29 im Umlenkungsbereich 30 oder am Kanalende zu vermeiden, schlägt die Erfindung vor, dass zumindest eine der Rippen 24 bei gleich bleibender Rippendicke D im Bereich der Flügelspitze 27 zur Vorderkante 18 oder zur Hinterkante 20 hin gekrümmt verläuft, und dass in der Krümmung 32 der Rippe 24 mindestens eine Öffnung 40 vorgesehen ist, durch die ein Teil des im Umlenkbereich 30 strömenden Kühlmittels 29 in den benachbarten Kühlkanal 22d durchtreten kann.

## Patentansprüche

1. Gekühlte Turbinenlaufschaufel (10) für eine stationäre, axial durchströmte Gasturbine,
mit einem Befestigungsbereich (12), von dem aus sich ein von einer saugseitigen Schaufelwand und einer druckseitigen Schaufelwand gebildetes Tragflügelprofil (16) bis zu einer Flügelspitze (27) hin erstreckt,
wobei das Tragflügelprofil (16) eine Vorderkante (18) und eine Hinterkante (20) aufweist,
mit im Inneren des Tragflügelprofils (16) zueinander benachbarten Kühlkanälen (22),
welche durch jeweils eine, die druckseitige Schaufelwand mit der saugseitigen Schaufelwand verbindende Rippe (24a, 24b, 24c) zumindest teilweise voneinander getrennt sind, und
mit einer die Kühlkanäle (22) spitzenseitig begrenzenden Abschlusswand (28),
**dadurch gekennzeichnet, dass**
zumindest eine der Rippen (24c) im Bereich der Flügelspitze (27) gekrümmt in die Abschlusswand (28) übergeht und
dass zumindest eine in der Krümmung (32) angeordnete, zwei benachbarte Kühlkanäle (22c, 22d) verbindende Öffnung (40) vorgesehen ist, durch die zur Prallkühlung der Abschlusswand (28) ein Teil einer Kühlmittelströmung (29) gerichtet auf deren Innenseite (42) strömbar ist.

2. Turbinenlaufschaufel (10) nach Anspruch 1,
bei der die zur Hinterkante (20) benachbarte Rippe (24c) im Bereich der Flügelspitze (27) gekrümmt ist.

3. Turbinenlaufschaufel (10) nach Anspruch 1 oder 2,
bei der die Rippe (24c) vom Befestigungsbereich (12) zum Spitzenbereich (26) gesehen zur Vorderkante (18) hin gekrümmt ist.

4. Turbinenlaufschaufel (10) nach Anspruch 1, 2 oder 3,
bei der die Rippe (24c) im Bereich der Krümmung (32) eine im Wesentlichen gleich bleibende Rippendicke (D) aufweist.

5. Turbinenlaufschaufel (10) nach einem der vorangehenden Ansprüche,
deren Innenseite (42) der Abschlusswand (28) mit Turbulatoren (44) ausgestattet ist.

6. Turbinenlaufschaufel (10) nach einem der vorangehenden Ansprüche,
bei der die Kühlkanäle (22a, 22b, 22c, 22d) sequentiell oder parallel von dem Kühlmittel (29) durchströmbar sind.
